# FASCICULE DE BREVET EUROPEEN

(11) **EP 1 640 591 B1**
(45) Date de publication et mention de la délivrance du brevet: **14.11.2007**
(21) Numéro de dépôt: 05108887.0
(22) Date de dépôt: 26.09.2005
(51) Int. Cl.: F02K 3/02, F01D 9/06, F01D 25/16

(54) **Turboréacteur avec un bras monobloc de raccord de servitudes et le bras monobloc de raccord de servitudes**
Turbinenstrahltriebwerk mit einem einteiligen Arm zur Verbindung von Hilfskomponenten
Turbojet engine with a monobloc arm for the connexion of subsidiaries

(30) Priorité: 27.09.2004 FR 0452174
(43) Date de publication de la demande: 29.03.2006
(73) Titulaire: SNECMA, 75015 Paris (FR)
(72) Inventeur: Letache, Johnny, 77390 Chaumes en Brie (FR); Gagneux, Pierre, 77930, Chailly en Bière (FR); Lefranc, Lionel, Jean, Léon, 77380, Combs la Ville (FR); Taglialavore, Joseph, 77190, Dammarie Les Lys (FR)
(74) Mandataire: David, Daniel

(56) Documents cités:
- EP-A- 0 601 864
- EP-A- 1 149 986
- FR-A- 2 631 386
- US-A- 4 987 736
- US-A- 5 746 574

## Description

L'invention concerne un turboréacteur avec raccord de servitudes.

Un turboréacteur à double flux comprend, fonctionnellement, une manche d'entrée d'air, une soufflante, un compresseur, une chambre de combustion, une turbine et une tuyère d'échappement. Ces divers éléments sont contenus dans des carters.

L'ensemble de ces carters forme un e coque externe, dont l'intérieur se définit comme le coeur du turboréacteur. Certains fluides nécessaires au fonctionnement du turboréacteur, tels que le carburant et l'huile, doivent être acheminés depuis l'extérieur du turboréacteur vers son coeur. Ces fluides servent notamment à alimenter la chambre de combustion en carburant, les divers éléments du moteur en huile de lubrification, divers vérins d'actionnement de vannes de décharge, de calage variable du compresseur, de pilotage du jeu des carters de turbine haute pression et basse pression, etc. L'acheminement des fluides est effectué par des canalisations communément appelées servitudes.

Un turboréacteur comprend, en aval du carter de rétention des aubes de soufflante, un carter, dit intermédiaire, auquel est généralement fixée la suspension avant du turboréacteur à un avion. Le carter intermédiaire comprend un carter externe, à l'intérieur duquel s'étend, concentriquement, un organe structural annulaire, les deux étant reliés par des bras radiaux, dont certains sont structuraux. En aval de l'organe structural annulaire, au droit de la portion aval du carter externe, est agencée une virole formant carénage. Certaines servitudes doivent être acheminées, depuis l'extérieur du carter externe, vers le coeur du turboréacteur, du côté intérieur de la virole. Cet acheminement se fait généralement le long d'un bras radial structural du carter intermédiaire, les servitudes débouchant dans le coeur du turboréacteur 1 au niveau de la virole.

L'invention concerne particulièrement le passage des servitudes le long d'un bras radial structural du carter intermédiaire du turboréacteur, mais la demanderesse n'entend pas limiter l'étendue de ses droits à cette seule application. L'invention concerne plus généralement le passage des servitudes le long d'un bras radial entre un carter externe et un organe annulaire interne.
La demande de brevet EP 0601864 décrit un turboréacteur ayant les caractéristiques du préambule de la revendication 1.

La demande de brevet FR 04 00 222 décrit un support de réception des servitudes, agencé sur la virole, comportant une semelle externe de réception des servitudes, une semelle interne de distribution des servitudes, les servitudes provenant du carter externe du carter intermédiaire étant insérées, par des embouts spécifiques de leur extrémité interne, comprenant un joint annulaire, dans des canaux de la semelle externe, qui débouchent dans le coeur du turboréacteur par des orifices de la semelle interne, où sont fixés des raccords de servitudes sur lesquels sont raccordées les servitudes du coeur du turboréacteur.

Bien que compacte, cette solution nécessite de venir raccorder une à une les servitudes dans leur canal respectif de la semelle de réception, ce qui est fastidieux et nécessite du temps sur les lignes d'assemblage moteur.

La présente invention vise à pallier cet inconvénient.

A cet effet, l'invention concerne un turboréacteur, comportant un carter externe, relié, par des bras radiaux, à un organe annulaire interne, en aval duquel est montée, au droit du carter externe, une virole formant carénage, des servitudes à l'extérieur du carter externe et des servitudes à l'intérieur de la virole, caractérisé par le fait qu'il comprend au moins un bras monobloc de raccord de servitudes entre l'extérieur du carter externe et l'intérieur de la virole, disposé parallèlement à un bras radial.

Par la caractérisation de monobloc pour un élément, on entend que l'élément comprend une pièce ou un ensemble de pièces fixées entre elles et se monte ou se démonte sur le turboréacteur en un bloc. Grâce à l'invention, le bras de raccord des servitudes, qui est monobloc, permet de relier directement l'extérieur du carter externe à l'intérieur de la virole, sans qu'il y ait besoin d'effectuer des raccords individuels de servitudes entre les deux, puisqu'on monte le bras d'un bloc. Le gain de temps sur la ligne de montage moteur est ainsi conséquent.

De préférence, le bras monobloc comprend des raccords de servitudes entre le carter externe et la virole, un bloc de passages des raccords de servitudes à travers le carter externe et un boîtier de distribution des raccords de servitudes.

Dans le domaine de l'aéronautique, la tenue au feu est un critère prépondérant. Ainsi, avantageusement, le boîtier de distribution des raccords de servitudes est anti-feu.

L'invention concerne également un bras de raccord de servitudes pour le turboréacteur ci-dessus, comprenant des raccords de servitudes entre le carter externe et la virole, un bloc de passages des raccords de servitudes à travers le carter externe et un boîtier de distribution des raccords de servitudes.

L'invention sera mieux comprise à l'aide de la description suivante de la forme de réalisation préférée du turboréacteur de l'invention, en référence aux planches annexées, sur lesquelles :
- la figure 1 représente une vue partielle en perspective éclatée du turboréacteur de l'invention, au niveau de son carter intermédiaire ;
- la figure 2 représente une vue schématique partielle en perspective du carter intermédiaire du turboréacteur de l'invention ;
- la figure 3 représente une vue schématique en perspective du bloc de passage de raccords de servitudes du bras monobloc du turboréacteur de l'invention ;
- la figure 4 représente une vue schématique en perspective du secteur d'appui joint du turboréacteur de l'invention ;
- la figure 5 représente une vue schématique partielle en perspective du carter intermédiaire, avec le bloc de passage de raccords de servitudes du bras monobloc et le secteur d'appui joint du turboréacteur de l'invention ;
- la figure 6 représente une vue schématique de dessus du boîtier de distribution du bras monobloc du turboréacteur de l'invention ;
- la figure 7 représente une vue en coupe du boîtier de la figure 6 suivant le plan A-A et
- la figure 8 représente une vue schématique en perspective du bras monobloc du turboréacteur de l'invention.

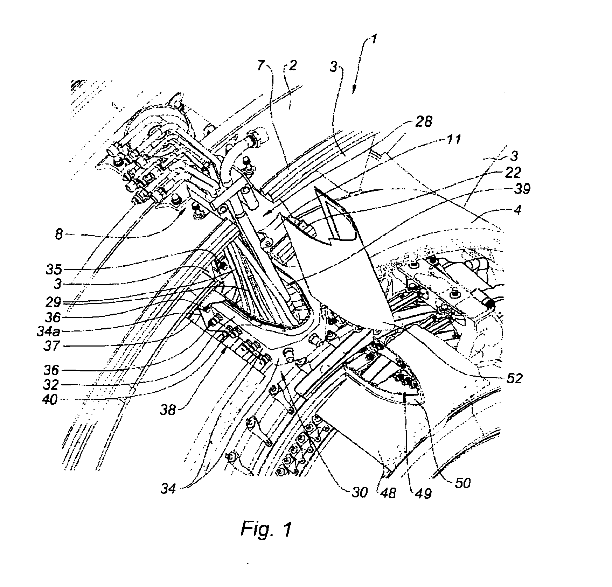

En référence à la figure 1, le turboréacteur 1 de l'invention, s'étendant suivant un axe de façon bien connue, comprend, en aval du carter de rétention des aubes de soufflante, montées rotatives autour de son axe, un carter intermédiaire, auquel est généralement fixée la suspension avant du turboréacteur 1 à un avion. Le carter intermédiaire comprend un carter externe 2, un organe annulaire interne 37, ici structural, concentrique au carter externe 2, ces deux éléments étant reliés par des bras radiaux 3, dont certains sont structuraux. Au pied des bras radiaux 3 est montée, sur l'organe annulaire interne 37, du côté aval, une virole 4 formant carénage, au droit du carter externe du carter intermédiaire 2.

L'invention concerne particulièrement le raccord de servitudes le long d'un bras radial structural 3 du carter intermédiaire 2, depuis l'extérieur du carter externe du carter intermédiaire 2 jusqu'à l'intérieur de la virole 4, à savoir dans le coeur du turboréacteur 1 au niveau de la virole 4, grâce à un bras monobloc 28 de raccord des servitudes.

Le bras monobloc 28 comprend un bloc 8 de passage de raccords de servitudes à travers le carter externe du carter intermédiaire 2, des raccords de servitudes 29 et un boîtier 30 de distribution de raccords de servitudes 29 au niveau de la virole 4. Ces divers éléments sont solidaires les uns des autres et forment un bloc, d'où la qualification de monobloc pour le bras 28. Le bras 28 peut ainsi être monté ou démonté en bloc sur le turboréacteur 1, entre le carter externe du carter intermédiaire et la virole 4, comme nous le verrons plus tard.

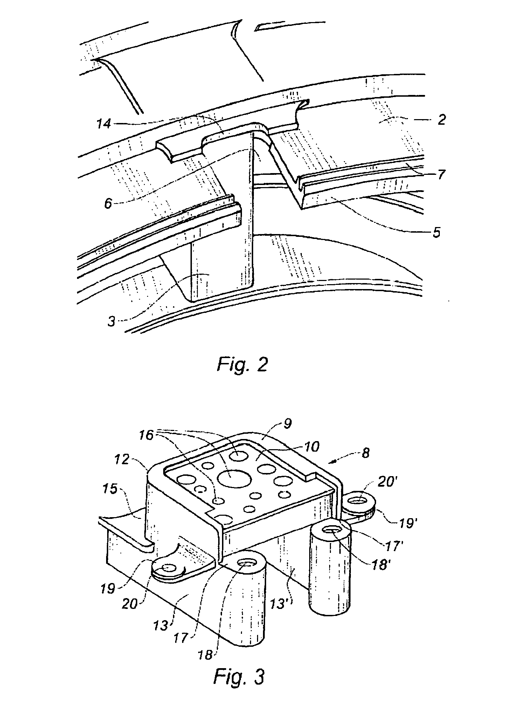

En référence à la figure 2, le carter externe du carter intermédiaire 2 est percé, au droit de la virole 4, depuis son bord aval 5, d'un évidement 6 longitudinal globalement rectangulaire. Le carter externe 2 comprend, le long de la circonférence de son bord aval 5, du côté externe, une gouttière 7.

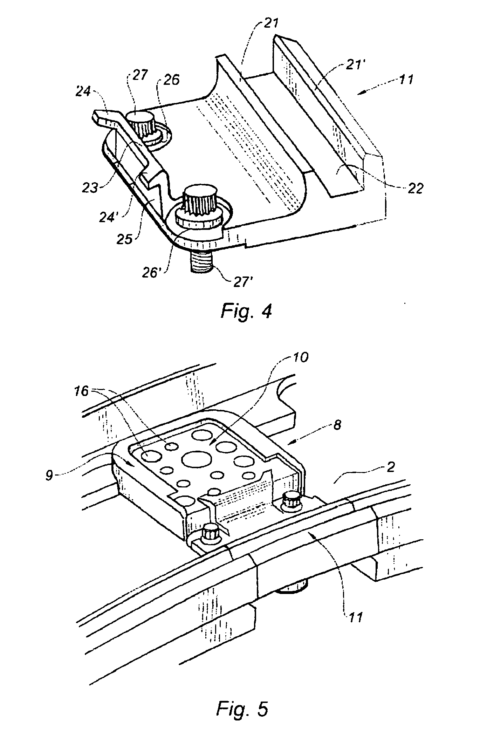

En référence à la figure 5, où le bloc de raccord de servitudes 8 a été représenté seul sur le carter externe 2, sans les autres éléments du bras monobloc 28, l'évidement 6 est agencé pour recevoir le bloc de passage de raccords de servitudes 8, comportant une bride de fixation 9 supportant un joint 10 de guidage et de bridage de raccords de servitudes 29. Une fois le bloc 8 monté sur le carter externe 2, une pièce 11, qui sera nommée secteur d'appui joint 11, est fixée sur lui et le carter externe 2. La bride 9 et le secteur d'appui joint 11 sont formés par fonderie. Le bloc de passage de raccords de servitudes 8 a pour fonction de guider et brider les raccords de servitudes 29, en vue d'obtenir un bras monobloc 28 standardisé et d'un encombrement réduit.

Les diverses pièces du turboréacteur de l'invention seront décrites, dans la suite de la description, dans le référentiel du turboréacteur. Ainsi, lorsque les pièces seront représentées, dans une figure, non montées sur le turboréacteur, on désignera leurs diverses portions en fonction de leur placement une fois montées. C'est dans le référentiel du turboréacteur, notamment en fonction de son axe, qu'il faudra comprendre les divers qualificatifs tels que interne, externe, radial, axial, longitudinal, amont, aval, ...

En référence à la figure 3, la bride 9 du bloc de passage de raccords de servitudes 8 du bras monobloc 28 se présente globalement sous la forme d'un étrier métallique, comprenant une base 12 et deux branches 13, 13', légèrement incurvé pour s'adapter à la forme du carter externe 2. La base 12 de la bride 9 est agencée pour venir en appui sur le fond amont 14 de l'évidement 6 du carter externe 2. Elle comprend un épaulement longitudinal 15 dont la partie en saillie longitudinale est du côté interne de la base 12. L'épaulement 15 est conformé pour venir en appui sur la face interne du carter externe 2, en amont de l'évidement 6.

Entre les branches 13, 13' de la bride 9, de son côté externe, est monté le joint 10, ici de matière élastomère, dont la surface externe est à un niveau légèrement plus interne que celui de la surface externe de la bride 9. Le joint élastomère 10 est percé d'une pluralité de canaux radiaux 16 de passage de raccords de servitudes 29.

A son extrémité aval, la bride 9 comprend, au niveau de chacune de ses branches 13, 13', un épaulement longitudinal 17, 17', situé à une distance de la surface externe de la bride 9 plus faible que celle de l'épaulement opposé 15 et qui correspond à l'épaisseur du joint 10. Sur chaque épaulement 17, 17' est percé, en travers de la branche 13, 13' correspondante , un alésage radial 18, 18' de réception d'une vis. En amont des épaulements 17, 17', deux oreilles 19, 19' font saillie sur les faces latérales des branches 13, 13'. Chaque oreille est percée d'un alésage radial 20, 20'.

En référence à la figure 4, le secteur d'appui joint 11 se présente sous la forme d'une plaque métallique. Il comporte, sur son bord aval, deux saillies radiales 21, 21' formant une gouttière 22, agencée pour assurer la continuité de la gouttière 7 du carter externe 2.

Sur son bord amont, le secteur d'appui joint 11 comporte une saillie radiale centrale 23 comportant à son extrémité externe deux doigts longitudinaux 24, 24', s'étendant vers l'amont, placés de chaque côté de la saillie 23. La face amont 25 de la saillie 23 et ses doigts 24, 24' sont conformés pour venir en appui sur la face aval et la face externe, respectivement, du joint élastomère 10.

Le secteur d'appui joint 11 comporte en outre, sur son bord amont, de part et d'autre de la saillie centrale 23, deux alésages radiaux 26, 26' de réception d'une vis 27, 27', respectivement, écartés l'un de l'autre de la même distance que les alésages 18, 18' des branches 13, 13' de la bride 9.

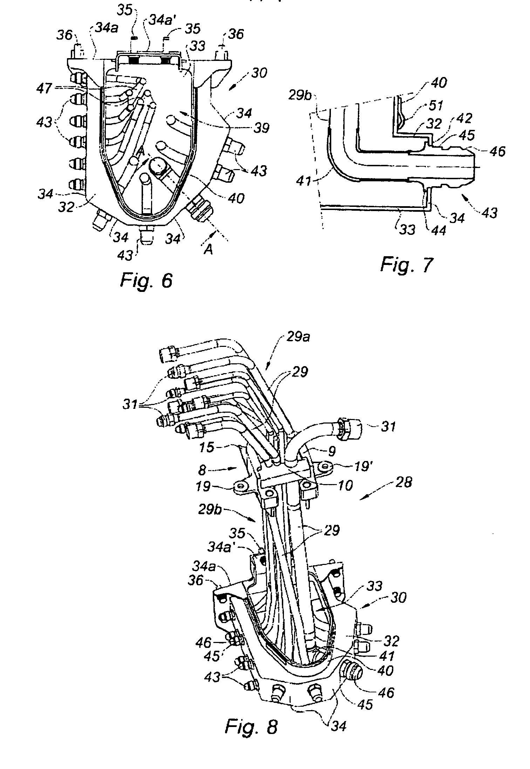

Les canaux 16 du joint 10 sont agencés pour recevoir les raccords de servitudes 29 du bras monobloc 28. Ces canaux 16 sont ainsi percés en fonction des raccords de servitudes 29 que l'on désire y faire passer. En l'espèce, les canaux 16 visibles sur les figures 3 et 5, dans lesquelles le joint 10 a été représenté sans les raccords de servitudes qu'il est destiné à guider et brider, ne sont pas agencés de la même façon que ceux des figures 1 et 8, qui reçoivent des raccords de servitudes 29, afin d'illustrer l'aspect modulable du joint 10 et donc du bras monobloc 28.

En référence à la figure 8, les raccords de servitudes 29 du bras monobloc 28 sont insérés dans leurs canaux 16 respectifs du joint 10, préalablement dimensionnés à cet effet. Ils comportent une portion 29a en saillie du côté extérieur du joint 10, que l'on nommera portion externe 29a, et une portion 29b s'étendant radialement entre le bloc de passage de raccords de servitudes 8 et le boîtier de distribution de raccords de servitudes 30, que l'on nommera portion interne 29b.

Chaque raccord de servitudes 29 est destiné à raccorder une servitude se situant à l'extérieur du carter externe 2 à une servitude se situant à l'intérieur de la virole 4. Chaque raccord de servitudes 29 possède donc des caractéristiques (section, matériau, ... ) adaptées aux caractéristiques des servitudes pour lesquelles il assure cette fonction de raccord. Le faisceau de raccords de servitudes 29 du bras monobloc 28, de même que les canaux 16 du joint 10 les enserrant, et, comme nous le verrons, le boîtier de distribution 30, sont ainsi préalablement dimensionnés en fonction des servitudes qui doivent passer parallèlement au bras radial 3 du carter intermédiaire, dans le bras monobloc 28 qui sera, une fois l'ensemble de ses éléments fixés les uns aux autres, monté sur le turboréacteur 1 sur la ligne de montage de ce dernier.

L'extrémité de la portion externe 29a de chaque raccord de servitudes 29 comporte un embout 31 agencé pour être raccordé à la servitude, comportant un embout complémentaire, que le raccord 29 a pour fonction de raccorder. La portion externe 29a des raccords de servitudes 29 peut éventuellement être coudée, avec un coude soudé entre deux portions de canalisation ou une canalisation d'une seule pièce coudée, afin d'être convenablement dirigée vers la servitude à raccorder. Les raccords de servitudes 29 s'étendent radialement vers l'intérieur, à partir du bloc de passage 8, vers le boîtier 30 de distribution des raccords de servitudes.

En référence à la figure 6, ce boîtier 30 est ici formé à partir d'une tôle, en l'espèce de 2 mm d'épaisseur. Il peut être formé par fonderie ou par soudure continue de plaques de tôles, afin de présenter une bonne résistance au feu. Il se présente sous la forme d'une boîte creuse, de forme hexagonale, éventuellement avec certaines portions courbes. Il comporte ainsi une paroi externe 32 hexagonale, une paroi interne 33 hexagonale, de même contour que la paroi externe 32, et des parois latérales 34, ici nommées "latérales" relativement au boîtier, éventuellement courbes, s'étendant entre les faces interne 33 et externe 32. L'une de ces parois 34, placée du côté amont, s'étend transversalement à l'axe du turboréacteur 1 ; elle sera ci-après dénommée la paroi amont 34a. Les faces externe 32 et interne 33 peuvent être bombées pour suivre la forme de la virole 4.

La paroi externe 32 est percée sur la majorité de sa surface d'un évidement 39 de passage des raccords de servitudes 29. Cet évidement 39 comporte ici un bord amont s'étendant sensiblement transversalement à l'axe du turboréacteur 1, de même dimension que la dimension transversale du bras radial 3, à partir duquel s'étendent deux bords longitudinaux qui s'arrondissent en aval pour se rejoindre, donnant à l'évidement 39 une forme semi ovale. L'évidement 39 est délimité par un épaulement 40 s'étendant en saillie vers l'extérieur de la paroi externe 32 du boîtier 30.

En référence à la figure 1, la virole 4 comporte un évidement 38 dans lequel est montée le boîtier 30, avec la face externe de sa paroi externe 32 placée juste en dessous du niveau de la virole 4. A partir de la paroi amont 34a, s'étend parallèlement à elle, en position centrale et vers l'extérieur, une paroi de fixation 34a', agencée pour être fixée au bras radial 3 par l'intermédiaire de vis 35. La paroi amont 34a est agencée quant à elle pour recevoir des vis 36 destinées à être fixées sur l'organe annulaire interne 37 de soutien de la virole 4.

La portion interne 29b de chaque raccord de servitude 29 comprend une portion rectiligne s'étendant radialement depuis le bloc de passage de raccords de servitudes 8 et le boîtier 30. Au niveau de l'épaulement 40 du boîtier, la portion interne 29b comporte un coude 41 après lequel le raccord de servitude 29 s'étend parallèlement à la face interne 33 du boîtier 30, en direction d'une paroi latérale 34 à travers laquelle il débouche par un mamelon 43 qui lui est fixé. Le raccord de servitude 29 peut être formé d'une seule pièce avec son coude 41, ou encore comporter deux portions de canalisations rectilignes de part et d'autre du coude 41, auquel elles sont soudées par soudure continue.

Chaque servitude 29 comporte ainsi, à son extrémité interne, un mamelon 43, ici métallique. Les parois latérales 34 du boîtier 30 comprennent une série d'évidements 42 de réception des mamelons 43. Chaque mamelon 43 comporte une collerette 44, un écrou 45 et un embout 46 de raccord à une servitude comportant un embout complémentaire. La collerette 44 est mise en butée contre la paroi entourant l'évidement 42 de réception du mamelon 43, à l'intérieur du boîtier 30, l'écrou 45 étant vissé du côté externe (une contre-clé peut typiquement être utilisée à l'intérieur du boîtier pour effectuer l'opération de vissage de l'écrou 45). L'embout 46 du mamelon 43 fait ainsi saillie hors du boîtier 30.

En plus de la fixation du mamelon 43 grâce à l'écrou 45, la collerette 44 est soudée ou brasée sur la paroi entourant l'évidement 42, par soudure continue. Cette soudure remplit deux fonctions : l'une, de fixation supplémentaire du mamelon 43 au boîtier 30, remplaçant un contre-écrou, l'autre, de protection anti-feu de l'intérieur du boîtier 30. L'étanchéité du boîtier 30 vis-à-vis du feu est ainsi grande, ce qui permet de garantir une bonne tenue au feu, dont l'exigence est grande dans le domaine aéronautique, notamment.

Les portions internes 29b des raccords de servitudes 29 peuvent éventuellement être solidarisées entre elles, par groupe de trois par exemple, par des plaquettes rigides 47, afin de réduire les vibrations des raccords de servitudes 29.

Le bras monobloc 28 comporte ainsi le bloc de passage de servitudes 8, le boîtier 30, et les raccords de servitudes 29, avec leur portion externe 29a de raccord à une servitude située à l'extérieur du carter externe 2 et leur portion interne 29b débouchant au niveau des mamelons 43 du boîtier, sur lesquels peuvent être raccordées des servitudes situées à l'intérieur de la virole 4. L'ensemble est soudé et donc figé, d'où la caractéristique de monobloc pour ce bras 28. Le nombre de raccords de servitudes 29, leurs caractéristiques, et par conséquent le nombre de canaux 16 du joint élastomère 10 et leur diamètre, le nombre d'alésages 42 du boîtier et leur diamètre, ainsi que les mamelons 43 destinés à y être soudés, sont calibrés en fonction des servitudes pour lesquelles on souhaite assurer une continuité entre l'extérieur du carter externe 2 et l'intérieur de la virole 4. Chaque bras monobloc 28 est donc standardisé en fonction de son emplacement et du turboréacteur 1 sur lequel il est destiné à être monté.

Le montage du bras monobloc 28 sur le turboréacteur 1 va maintenant être décrit plus en détails.

Le bras monobloc 28 est préalablement assemblé, avec tous ses éléments constitutifs qui ont été décrits plus haut, à savoir le bloc de passage des raccords de servitudes 8, les raccords de servitudes 29, les mamelons 43 et le boîtier 30. Cet ensemble monobloc est alors monté sur le turboréacteur 1 : le bloc de passage des raccords de servitudes 8 est monté dans l'évidement 6 du carter externe du carter intermédiaire 2, tandis que le boîtier est fixé à la bride 37 de soutien de la virole 4.

Le montage de la bride 9 du bloc de passage des raccords de servitudes 8, sur laquelle est agencé le joint élastomère 10, dans l'évidement 6 du carter externe 2 est le suivant. La bride 9 est montée dans l'évidement 6, avec sa base 12 en appui sur le fond amont 14 de l'évidement 6 et son épaulement 15 en appui sur la face interne du carter externe 2, en amont de l'évidement 6. Les oreilles 19, 19' sont en contact avec la face externe du carter externe 2, fixées à ce dernier par des vis dans leurs alésages 20, 20'.

Afin d'assurer la continuité de la gouttière 7 du carter externe 2, le secteur d'appui joint 11 est fixé à la bride 9 par les vis 27, 27', qui passent dans les alésages 18, 18' de la bride 9 à travers les alésages 26, 26' du secteur d'appui joint 11. La face amont 16 de la saillie 23 et ses doigts 24, 24' sont alors en appui sur la face aval et la face externe du joint élastomère 10 et il y a continuité entre les deux. Dans cette configuration, la gouttière 22 du secteur d'appui joint 11 assure la continuité de la gouttière 7 du carter externe 2.

Ainsi montés, la bride 9, le joint élastomère 10 et le secteur d'appui joint 11 assurent la continuité du carter externe 2, le bloc de passage de raccords de servitudes 8 permettant d'assurer le passage des raccords de servitudes au travers du carter externe 2, tout en les resserrant les uns par rapport aux autres, selon la répartition des canaux 16 sur le joint élastomère 10. Le bloc 8 assure en outre l'étanchéité de l'ensemble, les raccords de servitudes étant insérées à force dans leurs canaux 16.

Le boîtier 30 de distribution des raccords de servitudes 29 est fixé au bras radial 3 et à l'organe annulaire interne 37 de soutien de la virole 4, par les vis 35, 36 de sa paroi de fixation 34a' et de sa paroi amont 34a, respectivement. Sa paroi externe 32 se situe alors juste à l'intérieur du niveau de la virole 4. Un support de carénage 48 est alors monté pour venir coiffer le boîtier 30. Ce support de carénage 48 est agencé pour prolonger la forme de la virole 4 et en assurer la continuité. Il est formé de façon à être anti-feu et est par exemple fixé à la virole 4 par des vis et des écrous. Il comporte un évidement 49 délimité par un épaulement 50 qui est rendu solidaire de l'épaulement 40 du boîtier 30 par des moyens de maintien 51, prévus à cet effet. Cet épaulement 50 est ici de forme ovale pointue. Les moyens de maintien 51 sont agencés de façon à former un joint anti-feu entre le boîtier 30 et le support de carénage 48.

Un capot de bras 52 radial, de protection des raccords de servitudes 29, est monté sur le support de carénage 48, le bras radial 3 et la bride 9 du bloc de passage de raccords de servitudes 8. Ce capot de bras 52 se présente sous la forme d'une tôle s'adaptant à l'ensemble de ces éléments qu'il coiffe, afin de protéger les raccords de servitudes 29 du bras monobloc 28. Sa section est globalement constante sur sa hauteur radiale et correspond au contour de l'épaulement 50 du support de carénage 48. Le capot de bras 52 coiffe cet épaulement 50, des épaulements agencés sur la paroi de fixation 34a' du boîtier et la surface aval du bras radial 3 et les branches 13, 13' de la bride 9 du bloc de passage 8. Le capot de bras 52 est agencé pour compléter la forme du bras radial 3 dans un but de guidage du flux d'air secondaire s'écoulant entre le carter externe 2 et la virole 4. Sa forme est adaptée aux contraintes dynamiques qui sont imposées au flux, et procède de paramètres liés principalement à la mécanique des fluides. Le capot de bras 52 est formé de façon à être anti-feu et est fixé par des vis et des écrous.

Une fois l'ensemble de ces éléments montés, on obtient un raccord des servitudes entre l'extérieur du carter externe du carter intermédiaire 2 et l'intérieur de la virole 4, grâce au bras monobloc 28, parallèlement et en aval du bras radial 3. Le secteur d'appui joint 11, le support de carénage 48 et le capot de bras 52 assurent une fonction de continuité du carter externe 2, de la virole 4 et du bras radial 3, afin de ne pas gêner l'écoulement du flux d'air secondaire.

Le montage du raccord de servitudes est rapide, puisque le bras 28 est monté d'un bloc et qu'il ne reste ensuite qu'à monter les trois éléments de continuité énoncés ci-dessus. Le gain de temps sur la ligne d'assemblage du turboréacteur 1 est donc important. En outre, l'accessibilité est grande et permet de réduire les coûts de maintenance. Par ailleurs, les liaisons par soudure continue entre les divers éléments du boîtier 30, les mamelons 43 et les raccords de servitudes 29 assurent la tenue au feu du boîtier 30, qui est donc, en plus d'être un boîtier de distribution des raccords de servitudes 29, un boîtier anti-feu. A cet effet, les divers éléments du bras monobloc 28 peuvent être en inox. Le support de carénage 48 et le capot de bras 52 assurent également une fonction anti-feu.

Le turboréacteur de l'invention a été décrit en lien avec les mamelons 43 débouchant uniquement sur les faces latérales du boîtier 30, mais il va de soi que certains mamelons pourraient déboucher sur sa face interne 33.

## Revendications

1. Turboréacteur, comprenant un carter externe (2), relié, par des bras radiaux (3), à un organe annulaire interne (37), en aval duquel est montée, au droit du carter externe (2), une virole (4) formant carénage, des servitudes à l'extérieur du carter externe et des servitudes à l'intérieur de la virole, **caractérisé par le fait qu'**il comprend au moins un bras monobloc (28) de raccord de servitudes entre l'extérieur du carter externe (2) et l'intérieur de la virole (4), disposé parallèlement à un bras radial (3).

2. Turboréacteur selon la revendication 1, dans lequel le bras monobloc (28) comprend des raccords de servitudes (29) entre le carter externe (2) et la virole (4), un bloc (8) de passages des raccords de servitudes (29) à travers le carter externe (2) et un boîtier (30) de distribution des raccords de servitudes (29).

3. Turboréacteur selon la revendication 2, dans lequel le boîtier (30) est anti-feu.

4. Turboréacteur selon la revendication 3, dans lequel sur les raccords de servitudes (29) sont fixés des mamelons (43) débouchant du boîtier (30), soudés à ce dernier.

5. Turboréacteur selon la revendication 4, dans lequel chaque mamelon (43) comporte une collerette (44), un écrou (45) et un embout (46) de raccord à une servitude, l'écrou (45) étant vissé d'un côté du boîtier (30) et la collerette (44) soudée de l'autre.

6. Turboréacteur selon l'une des revendications 2 à 5, comprenant en outre un secteur d'appui joint (11) pour assurer la continuité du carter externe (2) en aval du bloc (8) de passage des raccords de servitudes (29), un capot de bras (52) pour coiffer les raccords de servitudes (29) en aval du bras radial (3) et un support de carénage (48) pour coiffer le boîtier (30) de distribution de raccords de servitudes (29) et assurer la continuité de la virole (4).

7. Turboréacteur selon l'une des revendications 1 à 6, qui est un turboréacteur à double flux, dans lequel le carter externe (2) est le carter externe du carter intermédiaire, le bras radial (3) un bras radial structural du carter intermédiaire et l'organe annulaire interne (37) l'organe annulaire interne du carter intermédiaire.

8. Bras monobloc de raccord de servitudes pour le turboréacteur de l'une des revendications 1 à 7, comprenant des raccords de servitudes (29) entre le carter externe (2) et la virole (4), un bloc (8) de passages des raccords de servitudes (29) à travers le carter externe (2) et un boîtier (30) de distribution des raccords de servitudes (29).

9. Bras monobloc selon la revendication 8, dans lequel le boîtier (30) est anti-feu.

10. Bras monobloc selon l'une des revendications 8 et 9, dans lequel sur les raccords de servitudes (29) sont fixés des mamelons (43) débouchant du boîtier (30), soudés à ce dernier.

11. Bras monobloc selon la revendication 10, dans lequel chaque mamelon (43) comporte une collerette (44), un écrou (45) et un embout (46) de raccord à une servitude, l'écrou (45) étant vissé d'un côté du boîtier (30) et la collerette (44) soudée de l'autre.

## Claims

1. A turbofan jet engine, including an external casing (2) connected by radial arms (3) to an annular internal device (37), downstream of which is mounted, opposite to the external casing (2), a shell (4) forming a fairing, ancillaries on the outside of the external casing and ancillaries on the inside of the shell, **characterised by** the fact that it includes at least one monoblock arm (28) for the connection of ancillaries between the outside of the external casing (2) and the inside of the shell (4), placed parallel to a radial arm (3).

2. A turbofan jet engine according to claim 1, in which the monoblock arm (28) includes ancillary connections (29) between the external casing (2) and the shell (4), a block (8) of ancillary-connection passages (29) through the external casing (2), and a box (30) for distribution of the ancillary connections (29).

3. A turbofan jet engine according to claim 2, in which the box (30) is fire-resistant.

4. A turbofan jet engine according to claim 3, in which nipples (43) entering from the box (30) and welded to the latter, are fixed to the ancillary connections (29).

5. A turbofan jet engine according to claim 4, in which each nipple (43) includes a collar (44), a nut (45), and a ferrule (46) for connection to an ancillary, the nut (45) being tightened on one side of the box (30) and the collar (44) welded on the other.

6. A turbofan jet engine according to one of claims 2 to 5, which also includes a gasket support sector (11) to provide continuity on the external casing (2) downstream of the block (8) employed for passage of the connections for ancillaries (29), an arm cover (52) to cover the ancillary connections (29) downstream of the radial arm (3), and a fairing support (48) to cover the distribution box (30) for the connection of ancillaries (29) and provide the continuity of the shell (4).

7. A turbofan jet engine according to one of claims 1 to 6, which is a double-flow turbofan jet engine, in which the external casing (2) is the external casing of the intermediate casing, the radial arm (3) is a structural radial arm of the intermediate casing, and the internal annular device (37) is the internal annular device of the intermediate casing.

8. An ancillary-connecting arm for the engine of one of claims 1 to 7, including ancillary connections (29) between the external casing (2) and the shell (4), a block (8) for passage of the ancillary connections (29) through the external casing (2), and a box (30) for distribution of the ancillary connections (29).

9. A monoblock arm according to claim 8, in which the box (30) is fire-resistant.

10. A monoblock arm according to one of claims 8 and 9 in which the nipples (43) entering from the box (30) and welded to the latter, are attached to the ancillary connections (29).

11. A monoblock arm according to claim 10, in which each nipple (43) includes a collar (44), a nut (45), and a ferrule (46) for connection to an ancillary, the nut (45) being tightened on one side of the box (30) and the collar (44) welded to the other.

## Patentansprüche

1. Turbinenstrahltriebwerk mit einem Außengehäuse (2), das mittels radialer Arme (3) mit einem inneren, ringförmigen Organ (37) verbunden ist, hinter dem außerhalb des Außengehäuses (2) ein Ring (4) angebracht ist, der eine Verkleidung für die Hilfskomponenten außerhalb des Außengehäuses und innerhalb des Rings bildet,
**dadurch gekennzeichnet,**
**dass** es mindestens einen einteiligen Arm (28) zur Verbindung von Hilfskomponenten zwischen dem Raum außerhalb des Außengehäuses (2) und dem Inneren des Rings (4) aufweist, welcher parallel zu einem radialen Arm (3) angeordnet ist.

2. Turbinenstrahltriebwerk nach Anspruch 1, bei dem der einteilige Arm (28) Hilfskomponenten-Verbindungen (29) zwischen dem Außengehäuse (2) und dem Ring (4), einen Block (8) mit Durchlässen für die Hilfskomponenten-Verbindungen (29) durch das Außengehäuse (2) und einen Verteilerkasten (30) der Hilfskomponenten-Verbindungen (29) umfasst.

3. Turbinenstrahltriebwerk nach Anspruch 2, bei dem der Verteilerkasten (30) feuerfest ist.

4. Turbinenstrahltriebwerk nach Anspruch 3, bei dem an den Hilfskomponenten-Verbindungen (29) Anschlussstücke (43) befestigt sind, die aus dem Verteilerkasten (30) herausführen und an diesem verschweißt sind.

5. Turbinenstrahltriebwerk nach Anspruch 4, bei dem jedes Anschlussstück (43) einen Befestigungsflansch (44), eine Mutter (45) und ein Endstück (46) zur Verbindung mit einer Hilfskomponente aufweist, wobei die Mutter (45) von einer Seite des Verteilerkastens (30) aufgeschraubt ist und der Befestigungsflansch (44) auf der anderen angeschweißt ist.

6. Turbinenstrahltriebwerk nach einem der Ansprüche 2 bis 5, das ferner einen Verbindungshaltesektor (11) enthält, um die Kontinuität des Außengehäuses (2) hinter dem Block (8) mit Durchlässen für die Hilfskomponenten-Verbindungen (29) zu gewährleisten, eine Armkappe (52) enthält, um die Hilfskomponenten-Verbindungen (29) hinter dem radialen Arm (3) abzudecken, sowie einen Verkleidungsträger (48) enthält, um den Verteilerkasten (30) der Hilfskomponenten-Verbindungen (29) abzudecken und die Kontinuität des Rings (4) zu gewährleisten.

7. Turbinenstrahltriebwerk nach einem der Ansprüche 1 bis 6, das ein Zweikreis-TL-Triebwerk ist, bei dem das Außengehäuse (2) das Außengehäuse des Zwischengehäuses ist, der radiale Arm (3) ein radialer Arm des Aufbaus des Zwischengehäuses ist und das innere, ringförmige Organ (37) das innere, ringförmige Organ des Zwischengehäuses ist.

8. Einteiliger Arm zur Hilfskomponenten-Verbindung für das Turbinenstrahltriebwerk nach einem der Ansprüche 1 bis 7, welcher Hilfskomponenten-Verbindungen (29) zwischen dem Außengehäuse (2) und dem Ring (4), einen Block (8) mit Durchlässen für die Hilfskomponenten-Verbindungen (29) durch das Außengehäuse (2) und einen Verteilerkasten (30) der Hilfskomponenten-Verbindungen (29) umfasst.

9. Einteiliger Arm nach Anspruch 8, bei dem der Verteilerkasten (30) feuerfest ist.

10. Einteiliger Arm nach einem der Ansprüche 8 und 9, bei dem an den Hilfskomponenten-Verbindungen (29) Anschlussstücke (43) befestigt sind, die aus dem Verteilerkasten (30) herausführen und an diesem verschweißt sind.

11. Einteiliger Arm nach Anspruch 10, bei dem jedes Anschlussstück (43) einen Befestigungsflansch (44), eine Mutter (45) und ein Endstück (46) zur Verbindung mit einer Hilfskomponente aufweist, wobei die Mutter (45) von einer Seite des Verteilerkastens (30) aufgeschraubt ist und der Befestigungsflansch (44) auf der anderen angeschweißt ist.
